(19) Europäisches Patentamt / European Patent Office / Office européen des brevets

(11) **EP 4 182 719 B1**

(12) **EUROPEAN PATENT SPECIFICATION**

(45) Date of publication and mention of the grant of the patent:
**11.06.2025 Bulletin 2025/24**

(21) Application number: **21745302.6**

(22) Date of filing: **13.07.2021**

(51) International Patent Classification (IPC):
**G01S 5/16** (2006.01)   **G06T 7/246** (2017.01)
**G06T 7/277** (2017.01)   **G06T 7/73** (2017.01)

(52) Cooperative Patent Classification (CPC):
**G01S 5/16; G06T 7/246; G06T 7/277; G06T 7/73;**
G01S 5/163; G06T 2207/10016; G06T 2207/20036

(86) International application number:
**PCT/EP2021/069497**

(87) International publication number:
**WO 2022/013237 (20.01.2022 Gazette 2022/03)**

(54) **SYSTEM AND METHOD FOR GEOLOCATION OF AN OBJECT IN WATER**

SYSTEM UND VERFAHREN ZUR GEOLOKALISIERUNG EINES OBJEKTS IN WASSER

SYSTÈME ET PROCÉDÉ DE GÉOLOCALISATION D'UN OBJET DANS L'EAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Validation States:
**MA TN**

(30) Priority: **14.07.2020 IT 202000017104**

(43) Date of publication of application:
**24.05.2023 Bulletin 2023/21**

(73) Proprietor: **Witted Srl**
**38068 Rovereto (TN) (IT)**

(72) Inventors:
• **SAIANI, Andrea**
  **38068 Trambileno (TN) (IT)**
• **ROCCO, Emanuele**
  **38068 Trambileno (TN) (IT)**
• **PAGNO, Nadir**
  **32030 Soranzen (BL) (IT)**
• **GOBBI, Isacco**
  **37052 Casaleone (VR) (IT)**
• **D'ACUNTO, Donato**
  **38121 Trento (IT)**

(74) Representative: **Morabito, Sara et al**
**Cantaluppi & Partners S.r.l.**
**Piazzetta Cappellato Pedrocchi, 18**
**35122 Padova (IT)**

(56) References cited:
**WO-A1-2012/129612**

• **WANG YANGYANG ET AL: "Pseudo-3D Vision-Inertia Based Underwater Self-Localization for AUVs", IEEE TRANSACTIONS ON VEHICULAR TECHNOLOGY, IEEE SERVICE CENTER, PISCATAWAY, NJ, US, vol. 69, no. 7, 9 May 2020 (2020-05-09) - 9 May 2020 (2020-05-09), pages 7895 - 7907, XP011798519, ISSN: 0018-9545, [retrieved on 20200715], DOI: 10.1109/TVT.2020.2993715**

## Description

### Technical field

The present invention relates to a system and a method for geolocation of an object in water.

### Technological background

The present invention is used particularly, though not exclusively, in the technical sector relating to the detection and the localization of an object, such as a drone, in an underwater environment.

Underwater localization has been extensively studied and many solutions are available today, mostly based on the acoustic communication channel and Underwater Wireless Sensors Network (UWSN). The main techniques are the following:

- Ultra Short Baseline (USBL), where an underwater acoustic transponder acoustically responds to the acoustic signals of a transceiver mounted on the hull of a surface vessel. This has a transducer array to triangulate the underwater transponder by using signal run time and measuring the phase shift across the arrays. The USBL transducer array is made of an unique device.
- Short Baseline (SBL): as the USBL, it requires a transducer array to triangulate an underwater transponder. Such array is connected with a central computing unit, but, in the SBL case, is made up instead of distinct wired modules, which could be so positioned on different sides of the surface vessel hull to achieve large transducer spacing. This increased baseline allows so for an improvement of positioning precisions of the underwater transponder.
- Long Baseline System (LBL): Differently from the USBL and SBL, in LBL an underwater transponder determines its locations from an acoustic transponder buoy network, which are sea-floor mounted in known locations.

However, these techniques generally involve a complex network or transducer architecture, reason why the systems which implement such techniques are relatively expensive, difficult to be integrated with micro underwater robots or with portable device, might require complex calibration procedures and so expert personnel to handle them. Moreover, if they are acoustic based, they have maximum bandwidth limited by the speed of sound in water.

An example of method and system for surveying or monitoring underwater features is disclosed in WO 2012/129612 A1.

### Statement of invention

The scope of this invention is to provide a system and a method for geolocation of an object in water which are structurally and functionally designed to overcome at least one of the drawbacks of the identified prior art.

This scope is achieved by of a system and a method for geolocation of an object in water obtained according to the respective independent claims appended to this description. The preferred characteristics of the invention are defined in the dependent claims. According to a first aspect of the invention, the system for geolocation of an object in water comprises a first device intended to be immersed in, or to float on, water. Preferably, the first device is an underwater drone, named also as remotely operated underwater vehicle (ROV).

Alternatively, the first device may be at least one of a boat, an apparatus fixed, or intended to be fixed, to the boat (in particular to the boat hull), a wearable device for a frogman, a floating device (e.g. a buoy) and a device anchored to a seabed.

The first device comprises a light source apt to emit a light beam.

Preferably, the light source is arranged at a top surface of first device.

The light source may be a LED device. Alternatively, the light source is a LASER device. Preferably, the light beam is a visible light, more preferably having wavelength of one of 450-485 nm, 500-565 nm. Alternatively, the light beam is a white light.

The system for geolocation further comprises a second device intended to be immersed in, or to float on, water.

Preferably, the second device is an underwater drone, named also as remotely operated underwater vehicle (ROV).

Alternatively, the second device may be at least one of a boat, an apparatus fixed, or intended to be fixed, to the boat (in particular to the boat hull), a wearable device for a frogman, a floating device (e.g. a buoy) and a device anchored to a seabed.

The second device comprises a camera for taking 2D images and a measuring device arranged to provide an orientation of the camera relative to a main reference frame defined by three orthogonal axes X, Y, Z.

Preferably, the camera is arranged at a bottom surface of second device.

A 2D image is a two-dimensional image on the image plane of the camera.

Preferably, the main reference frame is a Cartesian coordinate system having the origin of the orthogonal axes X, Y, Z in a predetermined point of the Earth.

The main reference frame is used for specifying the position relative to the Earth of an object, wherein axes X and Y define an horizontal plane for the horizontal position of the object and the axis Z represents its vertical position, in particular the depth.

Axis Z extends along the gravity direction passing through a predetermined point, namely the vertical direction, and the horizontal plane is perpendicular to the vertical direction. The camera has a camera reference frame defined by three orthogonal axes $X_c$, $Y_c$, $Z_c$, wherein $Z_c$ extends along the optical axis of the camera.

Preferably, the orientation of the camera relative to a main reference frame is defined by a set of three angles: pitch, roll and yaw, where pitch and roll are preferably given by a camera inertial measurement units comparing with the gravity vertical axis with the camera view direction, and yaw is preferably given by a camera magnetic sensor and considering pitch and roll with respect to the gravity vertical axis.

In other words, pitch is a rotation of the camera about the axis $X_c$, roll is a rotation of the camera about the axis $Y_c$ and yaw is a rotation of the camera about the axis $Z_c$. Preferably, the camera comprises inertial and magnetic sensors to measure the rotation of the camera about $X_c$, $Y_c$, $Z_c$ axes to provide pitch, roll and yaw angles.

Alternatively the orientation of the camera is given by a set of orientation quaternions, $q_1$ $q_2$ $q_3$ $q_4$, given by the joint operation of the camera magnetic compass (and/or GPS compass) and inertial measurement unit.

The system for geolocation further comprises a processing unit operatively connected to at least the camera.

According to an embodiment of the invention, the processing unit may be a single computing apparatus or a computing system comprising several computing apparatuses. The several computing apparatuses are not necessarily connected to each other.

One of several computing apparatuses is operatively connected to at least the camera. Preferably, one of several computing apparatuses is comprised in the first device, second device or in a further device (in particular the further device is a remote device). Preferably, the second device comprises the processing unit or the processing unit is comprised in a further device (in particular the further device is a remote device) operatively connected to at least the second device, preferably to the first device and the second device.

The processing unit may comprise a microcontroller and/or a microprocessor.

In addition or alternatively, the processing unit may comprise at least one of GPU (Graphics Processing Unit), ASIC (Application Specific Integrated Circuit), FPGA (Field Programmable Gate Array) and TPU (Tensor Processing Unit).

According to another aspect of the invention, the processing unit is configured to determine a vertical distance between the first device and the second device based on the depth in the water of both devices.

In particular, the depth in the water of the first device and the second device is the distance of the first device and the second device, respectively, from the surface of the water measured downward along a line parallel to the direction of the gravitational force. Alternatively, the depth in the water of the first device and the second device may be the distance of the first device and the second device, respectively, from a seafloor measured downward along a line parallel to the direction of the gravitational force.

The vertical distance corresponds to distance along the vertical direction between the first device and the second device.

In particular, the vertical distance is the difference between the depth of the first device and the depth of second device.

Preferably, the depth of the first device is equal to zero if the first device floats on water. Preferably, the depth of the second device is equal to zero if the second device floats on water.

Preferably, the depth of the first device in the water is stored as data in a data storage or it is measured by a depth gauge comprised in the first device.

The depth gauge may comprise a pressure sensor measuring the vertical distance of the first device to the surface of the water, or an altitude sensor measuring the vertical distance of the first device to the seafloor.

Preferably, the processing unit is operatively connected to the data storage and\or to the depth gauge of the first device.

Preferably, the depth of the second device in the water is stored as data in a data storage or it is measured by a depth gauge comprised in the second device.

The depth gauge may comprise a pressure sensor measuring the vertical distance of the second device to the surface of the water, or an altitude sensor measuring the vertical distance of the second device to the seafloor.

These altitude sensors could be acoustic ones - such as echo sounders, multi-beam echo sounders, or other sonar solutions - or even optical ones - such as laser interferometers, lidar, or stereo/depth cams or even monocular cams using properly trained algorithms or imaging seafloor features of known proportions and sizes.

Preferably, the processing unit is operatively connected to the data storage and\or to the depth gauge of the second device.

Alternatively, the processing unit comprises the data storage.

According to an aspect of the invention, the processing unit is configured to capture a 2D image of the first device, in particular of the light beam emitted by the light source, through the camera.

For taking the 2D image of the first device, the first device and/or the second device (in particular the camera) are/is arranged so that the first device (in particular the light source) is inside the field of view of the camera.

According to an aspect of the invention, the processing unit is configured to calculate the pixel position $p=(p_u,p_v)$ in the 2D image of light beam emitted by the light source of the first device.

The pixel position p of light beam, or more generally, of an object in the 2D image is the position expressed in pixel of that object relative to two orthogonal axes u,v extend along the two directions of the image plane of the camera and having origin preferably in a corner, more preferably in the left top corner, of the image plane.

Axes u,v define the image reference frame of the image plane.

In particular, the image reference frame is defined by two orthogonal axes u,v extend along the two directions of the image plane and having origin preferably in the top left corner of the image plane.

The calculation of the pixel position of light beam may be performed by any one of known object detection techniques of computer vision or other artificial intelligence techniques. Preferably, the calculation of the pixel position of light beam comprises a light beam detection.

Before describing an example of light beam detection, the following definitions are made:

- Dilation: it is a morphological operator through which the output value assigned at the analyzed pixel is the maximum value taken from the set of pixels in the neighborhood. This morphological operator is applied to a binary image, so the pixel is 1 if any of the pixel in the neighborhood is 1. This operator makes blobs, which are uniform color spots of roundish shape, more visible and fills any eventual holes. Light beam gives origin to bright blobs in the camera image,
- Erosion: it is a morphological operator opposite of Dilation, so the minimum value of the set of the neighborhood pixels is assigned to each output pixel. In a binary image the output pixel assumes a 0 value if any of the neighborhood pixels is 0. This operator makes blobs smaller and smoothed removing any eventually small isolated blobs,
- Structuring element: it is a matrix which defines the dimension of the blobs and consequently of the neighborhood. This matrix is typically chosen of the same size and shape of the desired blobs. Preferably, the matrix shape is a circle or an ellipse.

According to an embodiment of the invention, the light beam detection comprises the following algorithm steps:

- Converting the 2D image to grey-scale,
- Applying a Gaussian blur, preferably with 5x5 kernel,
- Converting the grey-scale image to binary image,
- Making erosion and dilation through an elliptic structuring element with size controlled by the vertical distance between the first device and the second device,
- Extraction of only blobs bigger than a specific size,
- Contouring of the light zone,
- Extracting the center of the zone and, preferably, drawing a circle there.

An example of size of the structuring element based on the vertical distance between the first device and the second device is summarized in the following table.

| Depth [m] | S.E. size - Erosion | S.E. size - Dilation |
|---|---|---|
| 2 | 20x20 | 15x15 |
| 3 | 12x12 | 12x12 |
| 4 | 4x4 | 8x8 |
| 5 | 1x1 | 10x10 |
| 6 | 1x1 | 12x12 |
| 7 | 1x1 | 12x12 |
| 8 | 1x1 | 15x15 |
| 9 | 1x1 | 15x15 |
| 10 | 1x1 | 15x15 |

(continued)

| Depth [m] | S.E. size - Erosion | S.E. size - Dilation |
|-----------|---------------------|----------------------|
| 11 | 1x1 | 18x18 |
| 12 | 1x1 | 20x20 |

Preferably, the light intensity of the light beam is controlled depending on the vertical distance between the first device and the second device. This allows to obtain a correct dimension of the light blob.

According to an aspect of the invention, the processing unit is configured to calculate a position of the first device relative to the main reference frame based on the pixel position of the light beam, the orientation of the camera, a position of the second device relative to the main reference frame and the vertical distance.

In particular, the position of the first device relative to the main reference frame is the position of the light beam emitted by the light source relative to the main reference frame.

Preferably, the position of the first device relative to the main reference frame is the position of the light source relative to the main reference frame.

According to an embodiment of the invention, the position of the second device relative to the main reference frame (X, Y, Z) is an information given by at least one of an absolute position sensor as GPS or similar, a real-time kinematic (RTK) positioning system as RTK-GPS, and a data storage.

In addition or alternatively to the above-mentioned localization techniques, the position of the second device relative to the main reference frame (X, Y, Z) is an information given by at least one of a mobile-phone tracking, a real-time locating system based on radio, optical or ultrasonic technology, and a positioning system based on methods of underwater acoustic positioning, as USBL, LBL or SBL.

These localization techniques can be used alone or in conjunction with other optical or acoustic methods or sensors measuring the displacement or velocity of the second device with respect to a seafloor, as optical or acoustic SLAM (Simultaneous Localization And Mapping) or DVL (Doppler Velocity Log) to increase the (geo) localization precision of the second device through one of known processes of data fusion.

Preferably, the second device comprises a GPS sensor, or more generally an absolute position sensor, for measuring the position of the second device relative to the main reference frame.

In particular, the position of the second device relative to the main reference frame is the position of the camera relative to the main reference frame.

Preferably, the calculation of the position of the first device relative to the main reference is based on a pinhole camera model, which is well known in the field of computer vision.

In particular, in order to calculate the position of the first device relative to the main reference frame, an intrinsic camera matrix may be applied to the calculated pixel position $p=(p_u,p_v)$ of the light beam, preferably followed by a distortion correction operation.

The intrinsic camera matrix is defined by camera parameters as:

$$C_m = \begin{bmatrix} f_x & s & c_x \\ 0 & f_y & c_y \\ 0 & 0 & 1 \end{bmatrix}$$

with fx and fy, the focal lengths expressed in pixel units.

It should be noted that fx, fy are the component x and y of the focal length (preferably expressed in pixel), where axes x,y are projections of axes Xc and Yc on the image plane and define a coordinate system of the image plane.

Moreover, cx and cy are the optical center coordinates in the coordinate system, both expressed in pixel, and s is the skew coefficient defined as $s = f_x \tan(\alpha)$. $\alpha$ is the angle between the camera x and y axes, so the skew coefficient (s) is non-zero when the image axes are not perpendicular.

According to an embodiment of the invention,

$$C_m = \begin{bmatrix} 387.84 & 0 & 329.86 \\ 0 & 386.03 & 179.79 \\ 0 & 0 & 1 \end{bmatrix}$$

An adjusted position $p'=(p'_u,p'_v)$ of the light beam is therefore obtained by following equation:

$$\begin{bmatrix} p' \\ 1 \end{bmatrix} := \begin{bmatrix} p'_u \\ p'_v \\ 1 \end{bmatrix} = \mathrm{Cm}^{-1} \cdot \begin{bmatrix} p_u \\ p_v \\ 1 \end{bmatrix}$$

The distortion correction operation may be applied to the adjusted position p' to obtain an undistorted position $pu = (pu_u, pu_v)$ of the light beam.

This operation is useful to correct possible distortions introduced by the camera hardware.

In geometric optics, such distortions comprise negative (or pincushion) distortion, positive (or barrel) distortion or tangential distortion. Negative and positive distortions, namely radial distortions, occurs when rays go more on the edges of the lens respect with the optical center of the camera whereas the tangential distortion occurs when the optical plane and the lens plane of the camera are not parallel.

In a particular embodiment of the invention, radial distortion can be corrected using the following model:

$$p'_u = pu_u(1 + r^2 k_1 + r^4 k_2 + r^6 k_3)$$

$$p'_v = pu_v(1 + r^2 k_1 + r^4 k_2 + r^6 k_3)$$

$$r^2 = pu_u{}^2 + pu_v{}^2$$

where $k_1$, $k_2$, $k_3$ are the coefficients of lens radial distortion.

Regarding the tangential distortion, it can be corrected using the following model:

$$p'_u = pu_u[2p_1 pu_u pu_v + p_2(r^2 + 2pu_u{}^2)]$$

$$p'_v = pu_v[2p_2 pu_u pu_v + p_1(r^2 + 2pu_v{}^2)]$$

where $p_1$, $p_2$ are the coefficients of lens tangential distortion.

According to an embodiment of the invention,

$$\begin{bmatrix} k_1 \\ k_2 \\ k_3 \\ p_1 \\ p_1 \end{bmatrix} = \begin{bmatrix} -0.333 \\ 0.126 \\ -0.0026 \\ -0.0009 \\ -0.018 \end{bmatrix}$$

According to an aspect of the invention, the coefficients of lens radial distortion and lens tangential distortion as well as the intrinsic camera matrix can be obtained by a geometric camera calibration process, which is known in the field of computer vision.

The undistorted position $pu = (pu_u, pu_v)$ of the light beam is therefore obtained by solving the following equations:

$$pu_u(1 + r^2 k_1 + r^4 k_2 + r^6 k_3) + [2p_1 pu_u pu_v + p_2(r^2 + 2pu_u{}^2)] - p'_u = 0$$

$$pu_v(1 + r^2 k_1 + r^4 k_2 + r^6 k_3) + [2p_2 pu_u pu_v + p_1(r^2 + 2pu_v{}^2)] - p'_v = 0$$

and

$$r = \sqrt{(pu_u{}^2 + pu_v{}^2)}.$$

According to an embodiment of the invention, in order to calculate the position of the first device relative to the main reference frame, the unrotated vector $P_{uR}$ can be obtained by following equation:

$$P_{uR} := \begin{bmatrix} P_{uR_X} \\ P_{uR_Y} \\ P_{uR_Z} \end{bmatrix} = R. \begin{bmatrix} pu_u \\ pu_v \\ 1 \end{bmatrix}$$

where R is a rotation matrix which represents the orientation of the camera relative to a main reference frame. The rotation matrix R could be given from successive Euler rotations given the Euler angles (pitch, roll and yaw) measured by the inertial sensors, and preferably in their supposed order, or directly estimated from the inertial sensors supplied quaternions. In a particular embodiment, R can be given by the following matrix:

$$R = \begin{pmatrix} C[\phi]C[\psi] & -C[\psi]S[\phi] & S[\psi] \\ C[\theta]S[\phi] + C[\phi]S[\theta]S[\psi] & C[\theta]C[\phi] - S[\theta]S[\phi]S[\psi] & -C[\psi]S[\theta] \\ S[\theta]S[\phi] - C[\theta]C[\phi]S[\psi] & C[\phi]S[\theta] + C[\theta]S[\phi]S[\psi] & C[\theta]C[\psi] \end{pmatrix}$$

where here C[] stands for the cos[] function, S[] for the sin[] function, $\phi$ = *yaw*, and $\psi$ = *roll* and $\theta$=pitch, whose rotations have been taken in this order.

Alternatively, R can be given by the following matrix:

$$R = \begin{pmatrix} 1 - 2(q_4 + q_3)^2 & 2(q_2 q_3 - q_1 q_4) & 2(q_2 q_4 + q_1 q_3) \\ 2(q_2 q_3 + q_1 q_4) & 1 - 2(q_2 + q_4)^2 & 2(q_3 q_4 - q_1 q_2) \\ 2(q_2 q_4 - q_1 q_3) & 2(q_3 q_4 + q_1 q_2) & 1 - 2(q_2 + q_3)^2 \end{pmatrix}$$

where the $q_1$, $q_2$, $q_3$, $q_4$ are given by the joint operation of the camera magnetic compass (and/ or GPS compass) and inertial measurement unit.

In a particular embodiment in which the camera is down looking and there no wave oscillations along X or Y axes (pitch= $\pi$ and roll preferably the null constant),

$$R = \begin{pmatrix} \text{Cos}[\phi] & -\text{Sin}[\phi] & 0 \\ -\text{Sin}[\phi] & -\text{Cos}[\phi] & 0 \\ 0 & 0 & -1 \end{pmatrix}$$

In an embodiment of the invention, $P_{uR}$ can be renormalized, preferably in mm, to obtain $P_R = (P_{R_x}, P_{R_y}, P_{R_z})$ according to the equation:

$$P_R = P_{uR}\alpha$$

In an embodiment of the invention $\alpha = Z_L$, where $Z_L$ is the (minimum) distance between the camera plane and the light plane. Preferably, the light plane is the plane parallel to the camera plane and passing through the point in space defined by the light source. In an embodiment of the invention , $Z_L$ can be given by the

$$Z_L = \Delta z \, \text{Sec}\left(\psi - \text{ArcTan}(pu_u)\right) \text{Sec}\left(\theta - \text{ArcTan}(-pu_v)\right) / \left(\sqrt{1 + pu_u^2}\sqrt{1 + pu_v^2}\right)$$

With Sec the secant function, $\psi$ = *roll* and $\theta$=pitch, and $\Delta z$ the vertical distance between the first device and the second device based on the depth in the water of both devices. $\Delta z$ is preferably given by the difference between the depth of the first device and the depth of second device (in particular the depth of the light source and the depth of the camera), with both depths preferably being negative values if both devices are submerged.

Preferably, the vertical distance $Z_L$ is in millimetres and, consequently, the position $P_R$ of the light beam is in millimetres.

Alternatively, $\alpha$ can be obtained by solving the following equation in $\alpha$:

$$P_{uR_Z}\alpha = \Delta z$$

Where $\Delta z$ is still the vertical distance between the first device and the second device based on the depth in the water of both devices. $\Delta z$ is preferably given by the difference between the depth of the first device and the depth of second device (in particular the depth of the light source and the depth of the camera), with both depths preferably being negative values if both devices submerged.

In a particular embodiment in which the camera is down looking and there no wave oscillations along X or Y axes, i.e. pitch= $\pi$ and roll preferably the null constant:

$$Z_L = -\Delta z$$

According to an aspect of the invention, the position P= $(P_X, P_Y, P_Z)$ of the first device relative to the main reference frame (X,Y,Z) can therefore be obtained by the translation equation:

$$P = P_R + t$$

where $t = (t_X, t_Y, t_Z)$ is a translation vector which represents the position of the second device (in particular of the camera) relative to the main reference frame (X,Y,Z).

The translation vector t could be given by an absolute position sensor or a real-time kinematic (RTK) positioning system, or it could be obtained from a data storage.

Pz preferably can be substituted with the depth of the first device (in particular the light source), since it can be directly measured with very small error.

Since the vertical distance $\Delta z$ between the first device and the second device, and the distance between the camera and the light plane $Z_L$ are preferably in millimetres, the position P of the first device is in millimetres too.

In alternative or in addition, the processing unit is configured to calculate a position of the second device relative to the main reference frame based on the pixel position of the light beam, the orientation of the camera, a position of the first device relative to the main reference frame and the vertical distance.

In this case, the position of the first device relative to the main reference frame (X, Y, Z) is an information given by at least one of an absolute position sensor as GPS or similar, a real-time kinematic (RTK) positioning system as RTK-GPS and a data storage.

In addition or alternatively to the above-mentioned localization techniques, the position of the first device relative to the main reference frame (X, Y, Z) is an information given by at least one of a mobile-phone tracking, a real-time locating system based on radio, optical or ultrasonic technology, and a positioning system based on methods of underwater acoustic positioning, as USBL, LBL or SBL.

These localization techniques can be used alone or in conjunction with other optical or acoustic methods or sensors measuring the displacement or velocity of the first device with respect to a seafloor, as optical or acoustic SLAM (Simultaneous Localization And Mapping) or DVL (Doppler Velocity Log) to increase the (geo) localization precision of the first device through one of known processes of data fusion.

Preferably, the first device comprises a GPS sensor, or more generally an absolute position sensor, for measuring the position of the first device relative to the main reference frame.

The position of the second device relative to the main reference frame (X, Y, Z) may be calculate by the above-mentioned procedure in which the translation vector $t = (t_X, t_Y, t_Z)$ now represents the position of the first device relative to the main reference frame (X,Y,Z).

These features allow to calculate the position of the first device and/or second device by using a camera and a light beam instead of known localization techniques, thus getting a simple system, in terms of architectural complexity, for geolocation of an object in water.

Contrary to acoustic devices, being light based, the system has the propagation delay between target and the detector which is negligible when compared to computing times. The detection speed of the light position changes is very fast and limited only by the FPS (Frame per Second) of the camera, and the speed of the computing units.

The system could have bandwidth easily surpassing hundreds Hz, while high-end versions with high speed camera and computing units could surpass the kHz. Fast acquisition rate allows also for a reduction of the statistical positioning error enhancing the effectiveness of downstream filters o state estimations algorithms.

The positioning errors also are limited only by the camera resolution, sensitivity, light beam shape and water conditions. In the camera reference frame, until the light source is detectable by the camera, it is possible to easily reach uncertainties at the level of cm and below. Moreover, in the shallow water or near the seafloor or surface, the position measurement is not affected and limited by signal reflections as in acoustic positioning. If the line of sight is established, it could well operate in caves. Contrary to UWSN, the system allows the localization of the light source with one camera only. The simplicity of the systems allows so its miniaturization and deployment on micro underwater robots, or on frogmen portable devices. It allows also for very much reduced costs of localization and wide adoption by professional and non professional users as well.

According to an embodiment of the invention, the position of the second device or the first device used for calculating the position of the first device or the second device, respectively, is stored in a data storage or provided by a position device.

According to an embodiment of the invention, the depth of the first device and/or the second device in the water is stored in a data storage or measured by a depth gauge. Therefore, the position of the second device or the first device used for calculating the position of the first device or the second device, respectively, is stored in a data storage or provided by a position device and/or the depth of the first device and/or the second device in the water is stored in a data storage or measured by a depth gauge.

As mentioned before, the depth gauge may comprise a pressure sensor measuring the vertical distance of the first device to the surface of the water, or an altitude sensor measuring the vertical distance of the first device to the seafloor.

In other words, the position of the second device or the first device used for calculating the position of the first device or the second device, respectively, is stored in a data storage or provided by a position device and the depth of the first device in the water is stored in the data storage or measured by a depth gauge comprised in the first device and the depth of the second device in the water is stored in the data storage or measured by a depth gauge comprised in the second device.

The data storage may consist of a single storage medium or several storage mediums. The single storage medium may be comprised in the first device, in the second device or in a further device (e.g. a, apparatus located on the ground).

The several storage mediums may be included in a single device (e.g. the first device, the second device or a further device which can be located, for example, on the ground) or in respective different devices.

For instance, the depth of the first device can be stored in a storage medium of the first device and/or in a storage medium of the second device and/or in a storage medium of a further device.

For instance, the depth of the second device can be stored in a storage medium of the first device and/or in a storage medium of the second device and/or in a storage medium of a further device.

For instance, if the position of the first device relative to the main reference frame is to be calculated, the position of the second device relative to the main reference frame can be stored in a storage medium of the first device and/or in a storage medium of the second device and/or in a storage medium of a further device.

For instance, if the position of the second device relative to the main reference frame is to be calculated, the position of the first device relative to the main reference frame can be stored in a storage medium of the first device and/or in a storage medium of the second device and/or in a storage medium of a further device.

The storage medium can be also a cloud storage if one device is connected to it, and information retrieved at need.

Preferably, the processing unit is operatively connected to the data storage and/or the position device so as to obtain the position of the second device or the first device for calculating the position of the first device or the second device, respectively, and the processing unit is operatively connected to the data storage and/or the depth gauge of the first device so as to obtain the depth of the first device in the water and to the data storage and/or the depth gauge of the second device so as to obtain the depth of the second device in the water for determining the vertical distance.

Preferably, the position device comprises an absolute position sensor as GPS or similar. According to an embodiment of the invention, the position device comprises at least one of an absolute position sensor, a real-time kinematic (RTK) positioning system, a mobile-phone tracking, a real-time locating system based on radio, optical or ultrasonic technology, and a positioning system based on methods of underwater acoustic positioning, as USBL, LBL or SBL.

Preferably, the position device comprises a GPS sensor, in particular a GPS receiver, which is an absolute position sensor or a position sensor of the RTK positioning system. Preferably, the first device or the second device is provided with the position device. According to an embodiment of the invention, the measuring device of the second device comprises inertial sensors and/or a magnetometer and/or GPS compass for providing the orientation of the camera relative to the main reference frame.

According to an embodiment of the invention, the first device comprises a first control unit connected to the light source for the modulation of light beam so that the light beam transmits information about the position and/or depth of the first device.

The modulation may be a light intensity modulation, which could be done by on-off keying, frequency-shift keying, or quadrature amplitude modulation, among other methods

The second device comprises an optical sensor apt to detect the light beam, the processing unit being connected to the optical sensor for obtaining the position and/or depth of the first device based on the light beam detected by the optical sensor.

In particular, the optical sensor is a photodiode or a photomultiplier or other photon detector, preferably arranged next to the camera. Alternatively, the camera comprises the optical sensor.

This feature allows to transmit information about the position and/or depth of the first device by using light beam, thus avoiding using additional technical means for this aim.

According to an embodiment of the invention, one of the first device and the second device has an acoustic emitter for emitting an acoustic signal which represents the position and/or depth of the relevant device and the other of the first device and the second device has an acoustic receiver for receiving the acoustic signal emitted by the acoustic emitter.

The processing unit is connected to the acoustic receiver for obtaining the position and/or depth of the one of the first device and the second device based on the signal received by the acoustic receiver.

With respect to the light modulation communication, the acoustic link could allow for continuous communication of the light motion and depth state to the camera even in the case of temporary interruption of line of sight. This information could be used by the camera computing units and algorithms to estimate the light location even during the small time intervals when the light source could not detected due to various reasons.

According to an embodiment of the invention, the first device and the second device are connected to each other by a marine communication cable through which the first device transmits to the second device information on its depth and/or position and/or the second device transmits to the first device information on its depth and/or position.

The marine cable is particular advantageous for tethered ROVs which could use their own cable for the communication link between light source and camera. It allows so a retrofit of the light localization system on underwater tethered vehicles which are already in deployment.

Preferably, the marine communication cable is a tether cable.

Preferably, the marine communication cable is an electrical cable or fibre optic cable.

According to an embodiment of the invention, at least one of the first device and the second device has an acoustic emitter for emitting an acoustic signal which represents the position and/or depth of the relevant device and/or has a marine communication cable through which it transmits to another device information on its depth and/or position.

For example, the another device may be a device arranged on land, boat or buoy.

Preferably, the another device is configured to relay the received information position and/or depth of the relevant device to the other of the first device and the second device. According to an embodiment of the invention, the processing unit is configured to predict a next position of the light beam in the 2D image captured through the camera by performing a recursive filtering algorithm based on at least an actual position and previous positions of the light beam in the 2D image.

This feature allows to perform a trajectory estimation of the light beam over time. Preferably, the recursive filtering algorithm is a Kalman filter.

The prevision of Kalman filter allows to carry out the light beam tracking so as to avoid or limit detection errors of the light beam, for instance caused by at least one of occlusion, illumination change and rapid motions of the light beam.

It will be described below the Kalman filter according to an embodiment of the invention. The Kalman filter system used to predict the next position, or state, of the light beam in the 2D image, assumes that the light position and velocity evolve according the following:

$$s_k = T s_{k-1} + w_{k-1}$$

where:

k is the time-step,
$s_k$, $s_{k-1}$ are actual ad previous states,
$T$ is the Transition matrix,
$w_{k-1}$ is the Process noise vector (preferably this process noise is a zero-mean Gaussian). It is assumed that there is no control input.

Kalman filter has an Observation vector $o_k$ which is linked to $s_k$ with the following:

$$o_k = H s_k + v_k$$

where:

$H$ is the Observation matrix,
$v_k$ is the Observation noise vector (preferably this observation noise is a zero-mean Gaussian).

The state and the observation vectors are defined by:

$$s_k = \begin{bmatrix} x_k \\ y_k \\ \dot{x}_k \\ \dot{y}_k \end{bmatrix}$$

$$o_k = \begin{bmatrix} x_{o\,k} \\ y_{o\,k} \end{bmatrix}$$

According to an embodiment of the invention, given the simple physical model of the light position dynamic, T is independent from k and it is given by the:

$$T = \begin{bmatrix} 1 & 0 & \Delta k & 0 \\ 0 & 1 & 0 & \Delta k \\ 0 & 0 & 1 & 0 \\ 0 & 0 & 0 & 1 \end{bmatrix}$$

with $\Delta k$ being the time delay between the state $s_k$ and $s_{k-1}$.

Since the observed variables are just the first two terms of the state vector, H is simply the following:

$$H = \begin{bmatrix} 1 & 0 & 0 & 0 \\ 0 & 1 & 0 & 0 \end{bmatrix}$$

In an embodiment of the invention, at the k time-step, the Kalman filter consists of two steps: predict and update. The first step is the estimation of the $s'_k$ state and the Covariance matrix $P'_k$, which are calculated by following:

$$s'_k = T s_{k-1}$$

$$P'_k = T P_{k-1} T^T + Q$$

Q is the estimate of the process noise covariance of $w_k$.

For k null $u_0$ is a null vector, $s_0$ and $P_0$ assumed to be:

$$s_0 = \begin{bmatrix} x_0 \\ y_0 \\ \dot{x}_0 \\ \dot{y}_0 \end{bmatrix}$$

$$P_0 = \begin{bmatrix} \sigma_x & 0 & 0 & 0 \\ 0 & \sigma_y & 0 & 0 \\ 0 & 0 & \sigma_{\dot{x}} & 0 \\ 0 & 0 & 0 & \sigma_{\dot{y}} \end{bmatrix}$$

where $\sigma_x$, $\sigma_y$, $\sigma_{\dot{x}}$ and $\sigma_{\dot{y}}$ are the uncertainties of each component and assuming no correlation between the components. The correction stage of Kalman filter calculates the Kalman gain, $K_k$, the state $s_k$ and the Covariance matrix $P_k$ with the:

$$K_k = P'_k H^T (H P'_k H^T + J)^{-1}$$

$$s_k = s'_k + K_k (o_k - H s'_k)$$

$$P_k = (I - K_k H)P'_k$$

$P_k$ represents reliability of the measurement. In this embodiment, J is a null matrix.

$x_{o_k}$ and $y_{o_k}$ are respectively $pu_u$ and $pu_v$ of the undistorted pixel position of the light beam.

According to an embodiment of the invention, the first device and/or the second device has both the light source and the camera preferably arranged on an opposite side to the light source.

According to an embodiment of the invention, the system comprises a third device intended to be immersed in, or to float on, water and at least one of the first device, second device and third device has both the light source and the camera.

In this way, the position of the first device relative to the main reference can be calculated by means of the camera of the third device and the position of third device relative to the main reference can be calculated by means of the camera of the second device.

This feature allows to immerge the first device in the water at greater depths.

According to an aspect of the invention, the method for geolocation of an object in water, comprises the following steps:

- putting a first device into water, wherein the first device comprising a light source apt to emit a light beam,
- putting a second device into the water, the second device comprising a camera for taking images,
- emitting the light beam by means of the light source,
- obtaining an orientation of the camera relative to a main reference frame defined by three orthogonal axes (X, Y, Z),
- obtaining the depth of the first device and the second device in the water,
- determining a vertical distance between the first device and the second device based on the depth thereof in the water,
- capturing a 2D image of the first device through the camera,
- calculating the pixel position in the 2D image of light beam emitted by the light source of the first device, and
- obtaining a position of the second device relative to the main reference frame and calculating a position of the first device relative to the main reference frame based on the pixel position of the light beam, the orientation of the camera, the position of the second device relative to the main reference frame and the vertical distance, or obtaining a position of the first device relative to the main reference frame and calculating a position of the second device relative to the main reference frame based on the pixel position of the light beam, the orientation of the camera, the position of the first device relative to the main reference frame and the vertical distance.

It should be noted that the method according to the invention can be carried out in real-time, i.e. the position of the first device or the second device relative to the main reference frame is calculated upon the depth of the first device and/or the depth of the second device and/or the position of the second device or the first device relative to the main reference frame is/are measured.

In addition or alternatively, the method according to the invention can be carried out off-line, in particular after the data acquisition through a post processing activity, i.e. at least the depth of the first device and the second device (and/or the vertical distance) and the position of the second device or the first device relative to the main reference frame are stored in a data storage, in particular the depth and position are first measured and then stored in the data storage, and the position of the first device or the second device relative to the main reference frame is calculated with a delay in relation to the production of that data.

In this case, the processing unit may be, for example, a computing system comprising several computing apparatuses, wherein a first computing apparatus is operatively connected to at least the camera and configured to:

- determine a vertical distance between the first device and the second device based on the depth in the water of both devices,
- capture a 2D image of the first device through the camera,
- calculate the pixel position in the 2D image of light beam emitted by the light source of the first device,

and a second computing apparatus is configured to calculate off-line the position of the first device and/or the second device relative to the main reference frame through a post processing activity. The second computing apparatus may be remote to the first device and the second device and preferably located on the ground.

In particular, the first computing apparatus is connected to the data storage and/or to the positioning device and/or to at least a depth gauge to calculate the pixel position in the 2D image of light beam and the second computing apparatus is connected to the data storage to calculate the position of the first device and/or the second device relative to the main reference frame by using the data stored in the data storage.

According to an embodiment of the invention, the position of the second device or the first device used in the method for calculating the position of the first device or the second device, respectively, is stored in a data storage or provided by a position device and/or the depth of the first device and/or the second device in the water is stored in a data storage or measured by a depth gauge.

In other words, the position of the second device or the first device used for calculating the position of the first device or the second device, respectively, is stored in a data storage or provided by a position device and the depth of the first device in the water is stored in the data storage or measured by a depth gauge comprised in the first device and the depth of the second device in the water is stored in the data storage or measured by a depth gauge comprised in the second device.

In particular, the position device comprises at least one of an absolute position sensor, a real-time kinematic (RTK) positioning system, a mobile-phone tracking, a real-time locating system based on radio, optical or ultrasonic technology, and a positioning system based on methods of underwater acoustic positioning, as USBL, LBL or SBL, wherein the first device or the second device is preferably provided with the position device.

According to an embodiment of the invention, the step of obtaining the position and/or depth of the first device comprises the following sub-step:

- modulating the emitted light beam so that the light beam transmits information about the position and/or depth of the first device,
- detecting the light beam by an optical sensor,
- determining the position and/or depth of the first device based on the light beam detected by the optical sensor.

According to an embodiment of the invention, the step of obtaining the position and/or depth of at least one of the first device and the second device in the water comprises the following sub-step:

- emitting an acoustic or electric signal which represents the position and/or depth of one between the first device and the second device,
- receiving the acoustic or electric signal,
- determining the position and/or depth of the one between the first device and the second device based on the received acoustic or electric signal.

According to an embodiment of the invention, the method comprises a step of predicting a next position of the light beam in the 2D image captured through the camera by performing a recursive filtering based on at least an actual position and previous positions of the light beam in the 2D image.

Finally, it should be noted that the system and method for geolocation of an object in water of the claimed invention allows to calculate (in particular estimate) the partial or full orientation in the 3D space of one of the first device and second device respect to the other one if the first device has at least two co-rigid light sources (which means the distance between each couple of light sources is fixed). At least two light sources are needed to calculate the partial orientation in 3D space whereas at least three not aligned light sources are needed to calculate the full orientation in 3D space.

Therefore, according to an embodiment of the invention, the first device comprises at least two light sources apt to emit respective light beams, the distance between each couple of light sources being fixed (i.e. it does not change over time).

The processing unit is configured to:

- calculate the pixel position in the 2D image of each light beam emitted by the at least two light sources of the first device,
- calculate the position of each of the at least two light sources relative to the main reference frame based on the pixel position of the relevant light beam, the orientation of the camera, a position of the second device relative to the main reference frame and the vertical distance, and
- determine the orientation of the first device relative to the second device based on the calculated positions of the at least two light sources.

In particular, for two light sources, the partial orientation in 3D is determined by geometric approaches, which means at first by calculating the vector joining the positions of the two light sources and then estimating its orientation by calculating the necessary 3D rotation (through an Euler angle rotation matrix or quaternion rotation) of an initial reference vector to obtain the estimated vector between the light sources.

In particular, for three not aligned light sources, the full orientation in 3D of their supporting surface or object is calculated by at first estimating the partial orientations in 3D of the two different vectors connecting the three positions of the light sources by estimating their rotations with respect to their reference vectors on a reference plane, i.e. the horizontal, having the same angle between them as the two vectors connecting the three light source positions; then the full orientation of the plane identified by the three light source positions is calculated by solving a system of equations having the two light source position vectors equaled to their respective rotations of their two corresponding reference vectors.

For more of three not aligned light sources, the orientation of the surface or solid over which the light sources are fixed may be determined by statistically averaging and renormalizing the estimated orientations of a sample or all combinations of three not aligned light sources chosen among the full list of light sources.

For each combination of three not aligned light sources, the full orientation in 3D is calculated by at first estimating the partial orientations in 3D of the two different vectors connecting the three positions of the light sources by estimating their rotations with respect to their reference vectors on a reference plane, i.e. the horizontal, having the same angle between them as the two vectors connecting the three light source positions; then the full orientation of the plane identified by the three light source positions is calculated by solving a system of equations having the two light source position vectors equaled to their respective rotations of their two corresponding reference vectors .

In addition or alternatively, the processing unit is configured to:

- calculate the pixel position in the 2D image of each light beam emitted by the at least two light sources of the first device,
- calculate the position of each of the at least two light sources relative to the main reference frame based on the pixel position of the relevant light beam, an orientation of a rigid surface of the first device relative to the main reference frame, a position of the first device relative to the main reference frame and the vertical distance, and
- determine the orientation of the second device relative to the first device based on the calculated positions of the at least two light sources.

Preferably, the rigid surface is provided with the at least two light sources apt to emit respective light beams and the orientation of the rigid surface of the first device relative to the main reference frame is defined by a set of three angles (i.e. pitch, roll and yaw) or a rotation quaternion vector, wherein the first device comprises inertial and magnetic sensors to measure the rotation of the rigid surface about pitch, roll and yaw axes or a rotation quaternion vector.

The method according to an embodiment of the claimed invention comprises:

- calculating the pixel position in the 2D image of each light beam emitted by each light source of the first device, wherein the first device comprises at least two light sources apt to emit respective light beams, the distance between each couple of light sources being fixed (i.e. it does not change over time),
- calculating the position of each of the at least two light sources relative to the main reference frame based on the pixel position of the relevant light beam, the orientation of the camera, a position of the second device relative to the main reference frame and the vertical distance, and determining the orientation of the first device relative to the second device based on the calculated positions of the at least two light sources, or
- calculating the position of each of the at least two light sources relative to the main reference frame based on the pixel position of the relevant light beam, an orientation of a rigid surface of the first device relative to the main reference frame, a position of the first device relative to the main reference frame and the vertical distance, and determining the orientation of the second device relative to the first device based on the calculated positions of the at least two light sources.

Finally, it should be noted that each of sensors and/or measuring device and/or processing unit and/or computing units may associate a timestamp or time signature to each measurement (as image, depth, altitude, orientation, GPS or RTK position, etc) and save it as well on the storage device or transmit it together with such measures. These timestamps could be used to identify synchronous measurements, through a synchronisation procedure of all the device clocks, or via algorithmic statistical approaches.

Brief description of the drawings

Features and advantages of the invention will be better appreciated from the following detailed description of preferred embodiments thereof which are illustrated by way of non-limiting example with reference to the appended Figures, in which:

- Figure 1 is a schematic view of a system for geolocation of an object in water according to an embodiment of the invention,

- Figure 2 shows a pinhole camera model related to a camera which is comprised in the system of figure 1,

**EP 4 182 719 B1**

- Figure 3 shows a calculated position relative to a main reference frame of a first device of system shown in figure 1,

- Figure 4 shows a trajectory estimation over time of a light beam of system shown in figure 1,

- Figure 5 is a schematic view of a system for geolocation of an object in water according to a second embodiment of the invention, and

- Figure 6 is a schematic view of a system for geolocation of an object in water according to a third embodiment of the invention.

Description of embodiments of the invention

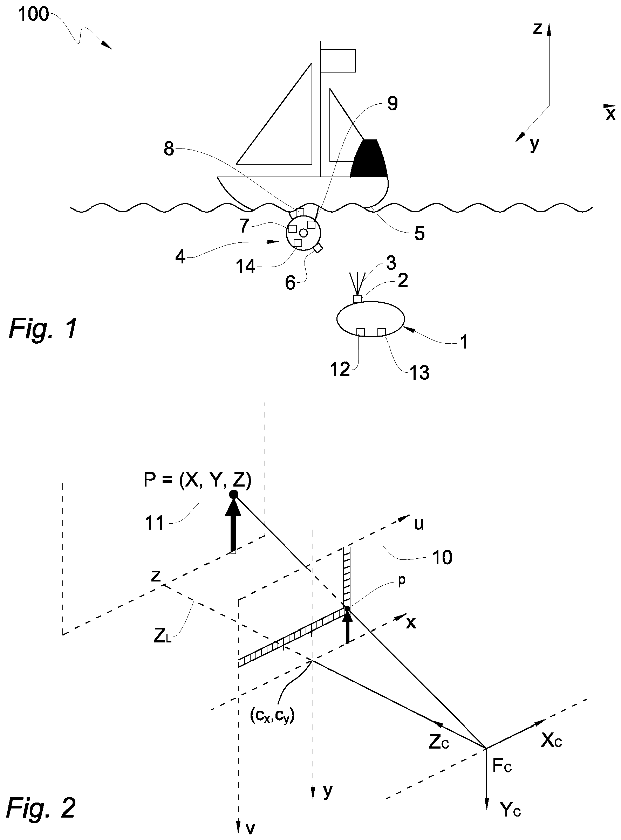

With reference to Figure 1, a system for geolocation of an object in water according to the present invention is indicated as a whole by the reference number 100.

The system comprises a first device, in particular a ROV, 1 immersed in water.

The first device 1 has a light source 2 (LED device) apt to emit a light beam 3.

The system comprises a second device 4 fixed to a boat hull 5.

The second device 4 comprises a camera 6 for taking 2D images and a measuring device 7 arranged to provide an orientation of the camera 6 relative to a main reference frame defined by three orthogonal axes X, Y, Z.

The measuring device 7 comprises inertial sensors and a magnetic compass for providing the orientation $imu_{cam}$ of the camera 6 relative to the main reference frame.

As shown in figure 2, the camera 6 has a camera reference frame defined by three orthogonal axes $X_c$, $Y_c$, $Z_c$, wherein $Z_c$ extends along the optical axis of the camera 6.

The orientation of the camera 6 relative to a main reference frame (X,Y,Z) is defined by a set of three angles: pitch, roll and yaw, wherein the pitch is a motion of the camera about the $X_c$ axis, the roll is a motion of the camera about the $Y_c$ axis and the yaw is a motion of the camera about the $Z_c$ axis.

The second device 4 further comprises a GPS sensor 8 for measuring the position of the second device 4, in particular the position $P_{cam}$ of the camera 6, relative to the main reference frame.

The second device 4 comprises a processing unit 9 operatively connected to the camera 6. The processing unit 9 is configured to determine a vertical distance $\Delta z$ between the first device 1 and the second device 4 based on the depth in the water of both devices. The distance $Z_l$ between the first device 1 and the second device 4 is the distance between the image plane 10 of the camera 6 and the light plane 11 of the light beam 3. The vertical distance $\Delta z$ includes offsets of the camera 6 with the water surface and the light with a depth gauge 12 of the first device 1 apt to measure the depth of the first device 1 in the water.

For instance, the position of the camera 6 (in mm) relative to the main reference frame (X,Y,Z) is $P_{cam}$ = ($X_{cam}$, $Y_{cam}$, 0) = (380,0,0), the orientation of the camera 6 relative to the main reference frame is $imu_{cam}$ = (pitch, roll, yaw) = ($\pi$, 0,0) and the vertical distance is $\Delta z$ = -650 (mm). $\Delta z$ is given by the difference between the depth of the light source, -650mm, and the null depth of the camera.

The pitch is set to $\pi$ since the camera 6 is down looking with respect to the vertical whereas the roll is 0 .

Moreover, in this example the camera 6 has an intrinsic camera matrix $C_m$ and distortion parameters $k_1$, $k_2$, $k_3$, $p_1$, $p_2$ defined as follows:

$$C_m = \begin{pmatrix} f_x & s & c_x \\ 0 & f_y & c_y \\ 0 & 0 & 1 \end{pmatrix} = \begin{pmatrix} 387.84 & 0 & 329.86 \\ 0 & 386.03 & 179.79 \\ 0 & 0 & 1 \end{pmatrix}$$

$$\begin{bmatrix} k_1 \\ k_2 \\ k_3 \\ p_1 \\ p_1 \end{bmatrix} = \begin{bmatrix} -0.333 \\ 0.126 \\ -0.0026 \\ -0.0009 \\ -0.018 \end{bmatrix}$$

The processing unit 9 is configured to capture a 2D image of the light beam 3 through the camera 6 and to calculate the pixel position p=($p_u$,$p_v$) in the 2D image of light beam 3 through a light beam detection, wherein $p_u$,$p_v$ are the position in pixel of light beam 3 along u,v axes which define the image reference frame of the image plane 10.

In this example, the calculated pixel position is:

$$p = \begin{bmatrix} p_u \\ p_v \end{bmatrix} = \begin{bmatrix} 93 \\ 189 \end{bmatrix}$$

The processing unit 9 is also configured to calculate a position P of the first device 1 (light beam 3) relative to the main reference frame based on the pixel position p of the light beam, the orientation of the camera, the position $P_{cam}$ and the vertical distance $\Delta z$.

In particular, the calculation of the position P of the first device 1 entails a calculation of an adjusted pixel position p'=(p'u,p'v) by following equation:

$$\begin{bmatrix} p'_u \\ p'_v \\ 1 \end{bmatrix} = \text{Cm}^{-1} . \begin{bmatrix} p_u \\ p_v \\ 1 \end{bmatrix}$$

and a distortion correction operation applied to the adjusted pixel position p' to obtain an undistorted pixel position pu=(pu_u, pu_v) of the light beam 3.

The undistorted pixel position pu=(pu_u, pu_v) of the light beam 3 is obtained by solving the following equations:

$$pu_u(1 + r^2 k_1 + r^4 k_2 + r^6 k_3) + [2p_1 pu_u pu_v + p_2(r^2 + 2pu_u{}^2)] - p'_u = 0$$

$$pu_v(1 + r^2 k_1 + r^4 k_2 + r^6 k_3) + [2p_2 pu_u pu_v + p_1(r^2 + 2pu_v{}^2)] - p'_v = 0$$

and

$$r = \sqrt{(pu_u{}^2 + pu_v{}^2)}.$$

The undistorted pixel position is therefore:

$$pu_u = \begin{bmatrix} pu_u \\ pu_v \end{bmatrix} = \begin{bmatrix} -0.6688 \\ 0.0260 \end{bmatrix}$$

In order to calculate the position of the first device relative to the main reference frame, the unrotated vector $P_{uR}$ can be obtained by following equation:

$$P_{uR} := \begin{bmatrix} P_{uR_X} \\ P_{uR_Y} \\ P_{uR_Z} \end{bmatrix} = R . \begin{bmatrix} pu_u \\ pu_v \\ 1 \end{bmatrix}$$

where R is a rotation matrix which represents the orientation of the camera relative to a main reference frame. The rotation matrix R could be given from successive Euler rotations given the Euler angles (pitch, roll and yaw) measured by the inertial sensors, and preferably in their supposed order, or directly estimated from the inertial sensors supplied quaternions. In a particular embodiment, R can be given by the following matrix:

$$R = \begin{pmatrix} C[\phi]C[\psi] & -C[\psi]S[\phi] & S[\psi] \\ C[\theta]S[\phi] + C[\phi]S[\theta]S[\psi] & C[\theta]C[\phi] - S[\theta]S[\phi]S[\psi] & -C[\psi]S[\theta] \\ S[\theta]S[\phi] - C[\theta]C[\phi]S[\psi] & C[\phi]S[\theta] + C[\theta]S[\phi]S[\psi] & C[\theta]C[\psi] \end{pmatrix}$$

where here C[] stands for the cos[] function, S[] for the sin[] function, $\phi$ = *yaw,* and $\psi$ = *roll* and $\theta$=pitch, whose rotations have been taken in this order.

Alternatively, R can be given by the following matrix:

$$R = \begin{pmatrix} 1 - 2(q_4 + q_3)^2 & 2(q_2q_3 - q_1q_4) & 2(q_2q_4 + q_1q_3) \\ 2(q_2q_3 + q_1q_4) & 1 - 2(q_2 + q_4)^2 & 2(q_3q_4 - q_1q_2) \\ 2(q_2q_4 - q_1q_3) & 2(q_3q_4 + q_1q_2) & 1 - 2(q_2 + q_3)^2 \end{pmatrix}$$

where the $q_1$, $q_2$, $q_3$, $q_4$ are given by the joint operation of the camera magnetic compass (and/ or GPS compass) and inertial measurement unit.

In the example, given $imu_{cam}$ = (pitch, roll, yaw) = ($\pi$, 0,0), where pitch = $\pi$ since the camera is down looking, R becomes the:

$$R = \begin{pmatrix} \text{Cos}[\phi] & -\text{Sin}[\phi] & 0 \\ -\text{Sin}[\phi] & -\text{Cos}[\phi] & 0 \\ 0 & 0 & -1 \end{pmatrix} = \begin{pmatrix} 1 & 0 & 0 \\ 0 & -1 & 0 \\ 0 & 0 & -1 \end{pmatrix}$$

And

$$P_{uR} = (-0.6688, -0.0260, -1).$$

In this example $P_{uR}$ is renormalized, preferably in mm, to obtain $P_R = (P_{R_x}, P_{R_y}, P_{R_z})$ according to the equation:

$$P_R = P_{uR}\alpha$$

In this example, $\alpha = Z_L$, where $Z_L$ is the (minimum) distance between the camera plane and the light plane. Preferably, the light plane is the plane parallel to the camera plane and passing through the point in space defined by the light source.

$Z_L$ is given by the

$$Z_L = \Delta z \, \text{Sec} \left( \psi - \text{ArcTan}(pu_u) \right) \text{Sec} \left( \theta - \text{ArcTan}(-pu_v) \right) / \left( \sqrt{1 + pu_u^2} \sqrt{1 + pu_v^2} \right)$$

With Sec the secant function, $\psi$ = roll and $\theta$=pitch. $\Delta z$ is given by the difference between the depth of the light source and the depth of the camera.

In this example, $\alpha = Z_L$ = -$\Delta z$ = 650 and $P_R$ = (-434.747, -16.9138,-650), expressed in mm since $Z_L$ in mm.

The position P= $(P_X, P_Y, P_Z)$ of the first device relative to the main reference frame (X,Y,Z) can therefore be obtained by the translation equation:

$$P = P_R + t$$

where $t = (t_X, t_Y, t_Z)$ is a translation vector which represents the position of the second device relative to the main reference frame (X,Y,Z) that is $t = P_{cam} = (X_{cam}, Y_{cam}, 0)$. Since $P_{cam}$ = (380,0,0), therefore P= $(P_X, P_Y, P_Z)$ = (-54.74, -16.913, -650).

The first device comprises a first control unit 13 connected to the light source 2 for modulation of light beam 3 so that the light beam transmits information about the depth of the first device 1.

The second device comprises an optical sensor 14 (a photodiode) apt to detect the light beam 3, the processing unit 9 being connected to the optical sensor 14 for obtaining the depth of the first device 1 based on the light beam detected by the optical sensor 14.

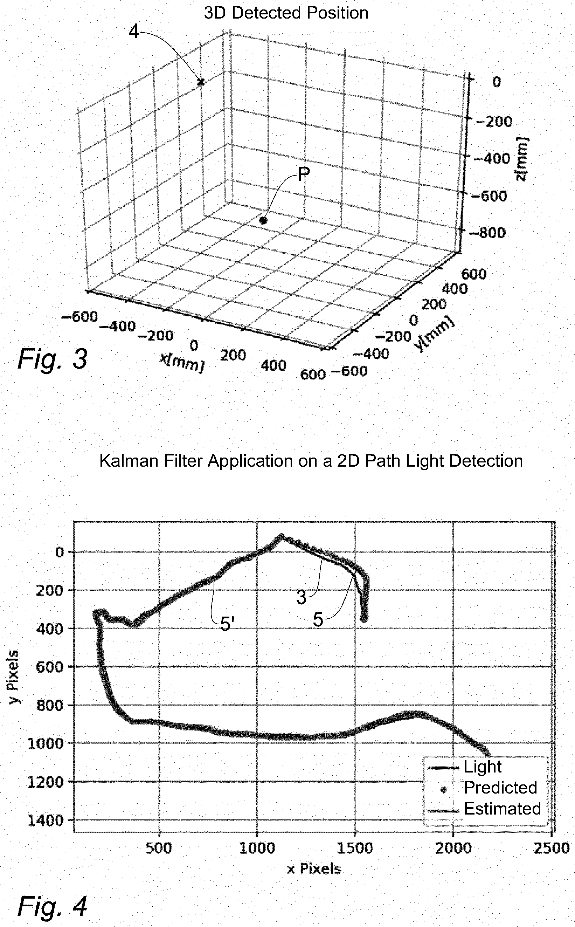

Figure 3 shows the calculated position of the first device 1 relative to the main reference frame (X,Y,Z).

Figure 4 shows a trajectory estimation of the light beam over time by an embodiment of Kalman filter according to the invention, wherein the camera 6 is moved along X and Y axes, the first device 1 is fixed and the yaw is aligned with camera vision.

The camera 6 has a camera FPS (frame per second) equal to 25, so T is:

$$T = \begin{bmatrix} 1 & 0 & 0.04 & 0 \\ 0 & 1 & 0 & 0.04 \\ 0 & 0 & 1 & 0 \\ 0 & 0 & 0 & 1 \end{bmatrix}$$

In addition, $P_0$, $Q$ and H are set as:

$$P_0 = \begin{bmatrix} 1 & 0 & 0 & 0 \\ 0 & 1 & 0 & 0 \\ 0 & 0 & 1 & 0 \\ 0 & 0 & 0 & 1 \end{bmatrix}$$

$$Q = \begin{bmatrix} 6.4\ 10^{-7} & 0 & 3.2\ 10^{-5} & 0 \\ 0 & 6.4\ 10^{-7} & 0 & 3.2\ 10^{-5} \\ 3.2\ 10^{-5} & 0 & 1.6\ 10^{-3} & 0 \\ 0 & 3.2\ 10^{-5} & 0 & 1.6\ 10^{-3} \end{bmatrix}$$

$$H = \begin{bmatrix} 1 & 0 & 0 & 0 \\ 0 & 1 & 0 & 0 \end{bmatrix}$$

And J is a null 4x4 matrix.
Below, a table showing twenty example points, ten at the beginning of the series and ten at the end, of the observed undistorted light position $o_k = (pu_u, pv_u)$, the predicted state $s'_k$ and the estimated state $s_k$ which have been obtained by the Kalman filter according to the above-mentioned parameters.

| $k$ | 0 | 1 | 2 | 3 | 4 |
|---|---|---|---|---|---|
| $o_k$ | 601,348 | 600,347 | 600,347 | 599,346 | 599,346 |
| $s'_k$ | 0.0,0.0,0.0,0.0,0. 0 | 595.96,345.56, 24.0,14.0 | 599.28,346.68, 32.0,17.0 | 601.36,347.72, 34.0,18.0 | 601.04,347.48, 26.0,12.0 |
| $s_k$ | 595.0,345.0,2 4.0,14.0 | 598.0,346.0,32. 0,17.0 | 600.0,347.0,34. 0,18.0 | 600.0,347.0,26. 0,12.0 | 600.0,347.0,20. 0,7.0 |

| k | 5 | 6 | 7 | 8 | 9 |
|---|---|---|---|---|---|
| $o_k$ | 598,345 | 597,345 | 597,344 | 596,343 | 596,343 |
| $s'_k$ | 600.8,347.28,20. 0,7.0 | 600.52,346.04,13. 0,1.0 | 599.2,345.96, 5.0,-1.0 | 598.04,344.8, 1.0,-5.0 | 596.92,343. 68,-2.0,-8.0 |
| $s_k$ | 600.0,347.0,20.0 ,7.0 | 599.0,346.0,5.0,-1.0 | 598.0,345.0,1. 0,-5.0 | 597.0,344.0,-- 2.0,-8.0 | 597.0,343.0 ,-- 3.0,-9.0 |

| k | 730 | 731 | 732 | 733 | 734 |
|---|---|---|---|---|---|
| $o_k$ | 242,182 | 241,182 | 240,183 | 239,183 | 238,184 |
| $s'_k$ | 242.56,181.44, -11.0,11.0 | 241.56,182.44, -11.0,11.0 | 240.56,182.44, -11.0,11.0 | 239.56,183.44, -11.0,11.0 | 238.56,183.44, -11.0,11.0 |
| $s_k$ | 242.0,182.0,-11.0- ,11.0 | 241.56,182.44, -11.0,11.0 | 240.0,183.0,-11.0- ,11.0 | 239.0,183.0,-11.0- ,11.0 | 238.0,184.0,-11.0,- 11.0 |

| k | 735 | 736 | 737 | 738 | 9 |
|---|---|---|---|---|---|
| $o_k$ | 237,184 | 237,184 | 235,185 | 234,185 | 234,186 |
| $s'_k$ | 237.56,184.44, -11.0,11.0 | 236.56,184.44, -11.0,11.0 | 235.56,185.44, -11.0,11.0 | 234.56,185.44, -11.0,11.0 | 234.56,185.44, -11.0,11.0 |
| $s_k$ | 237.0,184.0,-11.0- ,11.0 | 236.0,185.0,-11.0- ,11.0 | 235.0,185.0,-11.0- ,11.0 | 234.0,185.0,-11.0- ,11.0 | 234.0,186.0,-11.0,- 11.0 |

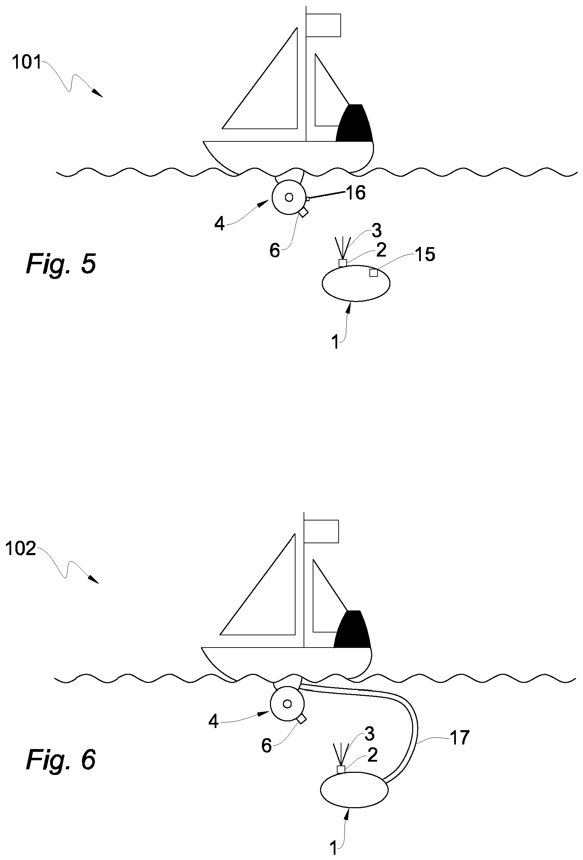

Figure 5 is a schematic view of a system for geolocation of an object in water according to a second embodiment of the invention. This system is indicated as a whole by the reference number 101.

System 101 differs from system 100 described above by the first device 1 has an acoustic emitter 15 for emitting an acoustic signal which represents the depth of the first device 1. The second device 4 has an acoustic receiver 16 for receiving the acoustic signal emitted by the acoustic emitter 15.

The processing unit 9 is connected to the acoustic receiver 16 for obtaining the depth of the on first device based on the signal received by the acoustic receiver 16.

Figure 6 is a schematic view of a system for geolocation of an object in water according to a third embodiment of the invention. This system is indicated as a whole by the reference number 102.

System 102 differs from system 100 described above by the first device 1 and the second device 4 are connected to each other by a marine communication cable 17 through which the first device 1 transmits to the second device 4 information on its depth.

The invention thereby solves the problem set out, at the same time achieving a number of advantages. In particular, the system for geolocation of an object in water according to the invention has a reduced architectural complexity compared to the known systems.

**Claims**

1.    System (100;101;102) for geolocation of an object in water, comprising:

   • a first device (1) intended to be immersed in, or to float on, water, the first device (1) comprising a light source (2) apt to emit a light beam (3),
   • a second device (4) intended to be immersed in, or to float on, water, the second device (4) comprising a camera (6) for taking 2D images and a measuring device (7) arranged to provide an orientation of the camera (6) relative to a main reference frame defined by three orthogonal axes (X, Y, Z),
   • a processing unit (9) operatively connected to at least the camera (6), the processing unit (9) being configured to:

      • determine a vertical distance ($\Delta z$) between the first device (1) and the second device (4) based on the depth in the water of both devices,

• capture a 2D image of the first device (1) through the camera (6),
• calculate the pixel position in the 2D image of light beam (3) emitted by the light source (2) of the first device (1),
• calculate a position of the first device (1) relative to the main reference frame based on the pixel position of the light beam (3), the orientation of the camera (6), a position of the second device (4) relative to the main reference frame and the vertical distance ($\Delta z$) or to calculate a position of the second device (4) relative to the main reference frame based on the pixel position of the light beam (3), the orientation of the camera (6), a position of the first device (1) relative to the main reference frame and the vertical distance ($\Delta z$).

2. System according to claim 1, wherein the position of the second device (4) or the first device (1) used for calculating the position of the first device (1) or the second device (4), respectively, is stored in a data storage or provided by a position device and wherein the depth of the first device (1) in the water is stored in the data storage or measured by a depth gauge (12) comprised in the first device (1) and the depth of the second device (4) in the water is stored in the data storage or measured by a depth gauge comprised in the second device (4).

3. System according to claim 2, wherein the processing unit (9) is operatively connected to the data storage or the position device so as to obtain the position of the second device (4) or the first device (1) for calculating the position of the first device (1) or the second device (4), respectively, and wherein the processing unit (9) is operatively connected to the data storage or the depth gauge of the first device (1) so as to obtain the depth of the first device (1) in the water and to the data storage or the depth gauge of the second device (4) so as to obtain the depth of the second device (4) in the water for determining the vertical distance ($\Delta z$).

4. System according to claim 3, wherein the position device comprises at least one of an absolute position sensor, a real-time kinematic (RTK) positioning system, a mobile-phone tracking, a real-time locating system based on radio, optical or ultrasonic technology, and a positioning system based on methods of underwater acoustic positioning, as USBL, LBL or SBL, wherein the first device (1) or the second device (4) is preferably provided with the position device.

5. System according to any one of preceding claims, wherein the first device (1) comprises a first control unit (13) connected to the light source (2) for modulation of light beam (3) so that the light beam (3) transmits information about the position and/or depth of the first device (1) and wherein the second device (4) comprises an optical sensor (14) apt to detect the light beam (3), the processing unit (9) being connected to the optical sensor (14) for obtaining the position and/or depth of the first device (1) based on the light beam (3) detected by the optical sensor (14).

6. System according to any one of preceding claims, wherein one of the first device (1) and the second device (4) has an acoustic emitter (15) for emitting an acoustic signal which represents the position and/or depth of the relevant device and the other of the first device and the second device has an acoustic receiver (16) for receiving the acoustic signal emitted by the acoustic emitter (15), the processing unit (9) being connected to the acoustic receiver (16) for obtaining the position and/or depth of the one of the first device (1) and the second device (4) based on the signal received by the acoustic receiver (16).

7. System according to any one of preceding claims, wherein the first device (1) and the second device (4) are connected to each other by a marine communication cable (17) through which the first device transmits to the second device information on its depth and/or position or the second device transmits to the first device information on its depth and/or position.

8. System according to any one of preceding claims, wherein the processing unit is configured to predict a next position of the light beam (3) in the 2D image captured through the camera (6) by performing a recursive filtering algorithm based on at least an actual position and previous positions of the light beam (3) in the 2D image.

9. System according to any one of preceding claims, wherein the first device comprises at least two light sources apt to emit respective light beams, the distance between each couple of light sources being fixed, and wherein the processing unit (9) is configured to:

• calculate the pixel position in the 2D image of each light beam emitted by the at least two light sources of the first device, and
• calculate the position of each of the at least two light sources relative to the main reference frame based on the pixel position of the relevant light beam, the orientation of the camera, a position of the second device relative to the main reference frame and the vertical distance, and to determine the orientation of the first device relative to the second device based on the calculated positions of the at least two light sources, or

• calculate the position of each of the at least two light sources relative to the main reference frame based on the pixel position of the relevant light beam, an orientation of a rigid surface of the first device relative to the main reference frame, a position of the first device relative to the main reference frame and the vertical distance, and to determine the orientation of the second device relative to the first device based on the calculated positions of the at least two light sources.

10. Method for geolocation of an object in water, comprising:

• putting a first device (1) into water, wherein the first device comprising a light source (2) apt to emit a light beam (3),

• putting a second device (4) into the water, the second device comprising a camera (6) for taking images,

• emitting the light beam (3) by means of the light source (2),

• obtaining an orientation of the camera (6) relative to a main reference frame defined by three orthogonal axes (X, Y, Z),

• obtaining the depth of the first device (1) and the second device (4) in the water,

• determining a vertical distance ($\Delta z$) between the first device (1) and the second device (4) based on the depth thereof in the water,

• capturing a 2D image of the first device (1) through the camera (6),

• calculating the pixel position in the 2D image of light beam (3) emitted by the light source (2) of the first device (1), and

• obtaining a position of the second device (4) relative to the main reference frame and calculating a position of the first device (1) relative to the main reference frame based on the pixel position of the light beam (3), the orientation of the camera (6), the position of the second device (4) relative to the main reference frame and the vertical distance ($\Delta z$), or obtaining a position of the first device (1) relative to the main reference frame and calculating a position of the second device (4) relative to the main reference frame based on the pixel position of the light beam (3), the orientation of the camera (6), the position of the first device (1) relative to the main reference frame and the vertical distance ($\Delta z$).

11. Method according to claim 10, wherein the position of the second device (4) or the first device (1) used for calculating the position of the first device (1) or the second device (4), respectively, is stored in a data storage or provided by a position device and wherein the depth of the first device in the water is stored in the data storage or measured by a depth gauge (12) comprised in the first device (1) and the depth of the second device (4) in the water is stored in the data storage or measured by a depth gauge comprised in the second device (4).

12. Method according to any one of claims 10-11, wherein the step of obtaining the position and/or depth of the first device (1) comprises:

• modulating the emitted light beam (3) so that the light beam transmits information about the position and/or depth of the first device (1),

• detecting the light beam (3) by an optical sensor (14),

• determining the position and/or depth of the first device (1) based on the light beam (3) detected by the optical sensor (14).

13. Method according to any one of claims 10-12, wherein the step of obtaining the position and/or depth of at least one of the first device (1) and the second device (4) in the water comprises:

• emitting an acoustic or electric signal which represents the position and/or depth of one between the first device (1) and the second device (4),

• receiving the acoustic or electric signal,

• determining the position and/or depth of the one between the first device (1) and the second device (4) based on the received acoustic or electric signal.

14. Method according to any one of claims 10-13, comprising:

• predicting a next position of the light beam (3) in the 2D image captured through the camera (6) by performing a recursive filtering based on at least an actual position and previous positions of the light beam (3) in the 2D image.

**15.** Method according to any one of claims 10-14, wherein the first device comprises at least two light sources apt to emit respective light beams, the distance between each couple of light sources being fixed, the method comprising:

- calculating the pixel position in the 2D image of each light beam emitted by each light source of the first device,
- calculating the position of each of the at least two light sources relative to the main reference frame based on the pixel position of the relevant light beam, the orientation of the camera, a position of the second device relative to the main reference frame and the vertical distance, and determining the orientation of the first device relative to the second device based on the calculated positions of the at least two light sources, or
- calculating the position of each of the at least two light sources relative to the main reference frame based on the pixel position of the relevant light beam, an orientation of a rigid surface of the first device relative to the main reference frame, a position of the first device relative to the main reference frame and the vertical distance, and determining the orientation of the second device relative to the first device based on the calculated positions of the at least two light sources.

## Patentansprüche

**1.** System (100; 101; 102) für Geolokalisierung eines Objekts im Wasser, umfassend:

○ eine erste Vorrichtung (1), die dazu bestimmt ist, in Wasser eingetaucht zu werden oder auf Wasser zu schwimmen, wobei die erste Vorrichtung (1) eine Lichtquelle (2) umfasst, die geeignet ist, einen Lichtstrahl (3) auszusenden,

○ eine zweite Vorrichtung (4), die dazu bestimmt ist, in Wasser eingetaucht zu werden oder auf Wasser zu schwimmen, wobei die zweite Vorrichtung (4) eine Kamera (6) zur Aufnahme von 2D-Bildern und eine Messvorrichtung (7) umfasst, die angeordnet ist, um eine Ausrichtung der Kamera (6) relativ zu einem Hauptbezugssystem, das durch drei orthogonale Achsen (X, Y, Z) definiert ist, bereitzustellen,

○ eine Verarbeitungseinheit (9), die operativ zumindest mit der Kamera (6) verbunden ist, wobei die Verarbeitungseinheit (9) konfiguriert ist, um:

■ einen vertikalen Abstand ($\Delta$) zwischen der ersten Vorrichtung (1) und der zweiten Vorrichtung (4) basierend auf der Tiefe beider Vorrichtungen im Wasser zu bestimmen,

■ ein 2D-Bild der ersten Vorrichtung (1) durch die Kamera (6) aufzunehmen,

■ die Pixelposition des von der Lichtquelle (2) der ersten Vorrichtung (1) ausgesendeten Lichtstrahls (3) im 2D-Bild zu berechnen,

■ eine Position der ersten Vorrichtung (1) relativ zum Hauptbezugssystem basierend auf der Pixelposition des Lichtstrahls (3), der Ausrichtung der Kamera (6), einer Position der zweiten Vorrichtung (4) relativ zum Hauptbezugssystem und dem vertikalen Abstand ($\Delta$) zu berechnen, oder eine Position der zweiten Vorrichtung (4) relativ zum Hauptbezugssystem basierend auf der Pixelposition des Lichtstrahls (3), der Ausrichtung der Kamera (6), einer Position der ersten Vorrichtung (1) relativ zum Hauptbezugssystem und dem vertikalen Abstand ($\Delta$) zu berechnen.

**2.** System nach Anspruch 1, wobei die für die Berechnung der Position der ersten Vorrichtung (1) oder der zweiten Vorrichtung (4) verwendete Position der zweiten Vorrichtung (4) oder der ersten Vorrichtung (1) in einem Datenspeicher gespeichert oder durch eine Positionsvorrichtung bereitgestellt wird, und wobei die Tiefe der ersten Vorrichtung (1) im Wasser in dem Datenspeicher gespeichert oder durch einen in der ersten Vorrichtung (1) enthaltenen Tiefenmesser (12) gemessen wird, und die Tiefe der zweiten Vorrichtung (4) im Wasser in dem Datenspeicher gespeichert oder durch einen in der zweiten Vorrichtung (4) enthaltenen Tiefenmesser gemessen wird.

**3.** System nach Anspruch 2, wobei die Verarbeitungseinheit (9) operativ mit dem Datenspeicher oder der Positionsvorrichtung verbunden ist, um die Position der zweiten Vorrichtung (4) oder der ersten Vorrichtung (1) für die Berechnung der Position der ersten Vorrichtung (1) oder der zweiten Vorrichtung (4) zu erhalten, und wobei die Verarbeitungseinheit (9) operativ mit dem Datenspeicher oder dem Tiefenmesser der ersten Vorrichtung (1) verbunden ist, um die Tiefe der ersten Vorrichtung (1) im Wasser zu erhalten, und mit dem Datenspeicher oder dem Tiefenmesser der zweiten Vorrichtung (4) verbunden ist, um die Tiefe der zweiten Vorrichtung (4) im Wasser für die Bestimmung des vertikalen Abstands ($\Delta$) zu erhalten.

**4.** System nach Anspruch 3, wobei die Positionsvorrichtung mindestens einen absoluten Positionssensor, ein Echtzeit-Kinematik (RTK)-Positionierungssystem, eine Mobiltelefon-Ortung, ein Echtzeit-Lokalisierungssystem basierend auf Funk-, optischer oder Ultraschalltechnologie, und ein Positionierungssystem basierend auf Methoden der akustischen Unterwasserpositionierung, wie USBL, LBL oder SBL, umfasst, wobei vorzugsweise die erste Vorrichtung (1) oder die zweite Vorrichtung (4) mit der Positionsvorrichtung ausgestattet ist.

5. System nach einem der vorhergehenden Ansprüche, wobei die erste Vorrichtung (1) eine erste Steuerungseinheit (13) umfasst, die mit der Lichtquelle (2) zur Modulation des Lichtstrahls (3) verbunden ist, sodass der Lichtstrahl (3) Informationen über die Position und/oder Tiefe der ersten Vorrichtung (1) überträgt, und wobei die zweite Vorrichtung (4) einen optischen Sensor (14) umfasst, der geeignet ist, den Lichtstrahl (3) zu erfassen, wobei die Verarbeitungseinheit (9) mit dem optischen Sensor (14) verbunden ist, um die Position und/oder Tiefe der ersten Vorrichtung (1) basierend auf dem vom optischen Sensor (14) erfassten Lichtstrahl (3) zu erhalten.

6. System nach einem der vorhergehenden Ansprüche, wobei eine der ersten Vorrichtung (1) und der zweiten Vorrichtung (4) einen akustischen Emitter (15) zum Aussenden eines akustischen Signals aufweist, das die Position und/oder Tiefe der relevanten Vorrichtung darstellt, und die andere der ersten Vorrichtung und der zweiten Vorrichtung einen akustischen Empfänger (16) zum Empfangen des vom akustischen Emitter (15) ausgesendeten akustischen Signals aufweist, wobei die Verarbeitungseinheit (9) mit dem akustischen Empfänger (16) verbunden ist, um die Position und/oder Tiefe der einen der ersten Vorrichtung (1) und der zweiten Vorrichtung (4) basierend auf dem vom akustischen Empfänger (16) empfangenen Signal zu erhalten.

7. System nach einem der vorhergehenden Ansprüche, wobei die erste Vorrichtung (1) und die zweite Vorrichtung (4) durch ein maritimes Kommunikationskabel (17) miteinander verbunden sind, über das die erste Vorrichtung der zweiten Vorrichtung Informationen über ihre Tiefe und/oder Position übermittelt oder die zweite Vorrichtung der ersten Vorrichtung Informationen über ihre Tiefe und/oder Position übermittelt.

8. System nach einem der vorhergehenden Ansprüche, wobei die Verarbeitungseinheit konfiguriert ist, eine nächste Position des Lichtstrahls (3) im durch die Kamera (6) aufgenommenen 2D-Bild vorherzusagen, indem sie einen rekursiven Filteralgorithmus basierend auf mindestens einer aktuellen Position und früheren Positionen des Lichtstrahls (3) im 2D-Bild durchführt.

9. System nach einem der vorhergehenden Ansprüche, wobei die erste Vorrichtung mindestens zwei Lichtquellen umfasst, die geeignet sind, jeweilige Lichtstrahlen auszusenden, wobei der Abstand zwischen jedem Paar von Lichtquellen festgelegt ist, und wobei die Verarbeitungseinheit (9) konfiguriert ist, um:

◦ die Pixelposition jedes von den mindestens zwei Lichtquellen der ersten Vorrichtung ausgesendeten Lichtstrahls im 2D-Bild zu berechnen, und
◦ die Position jeder der mindestens zwei Lichtquellen relativ zum Hauptbezugssystem basierend auf der Pixelposition des jeweiligen Lichtstrahls, der Ausrichtung der Kamera, einer Position der zweiten Vorrichtung relativ zum Hauptbezugssystem und dem vertikalen Abstand zu berechnen und die Ausrichtung der ersten Vorrichtung relativ zur zweiten Vorrichtung basierend auf den berechneten Positionen der mindestens zwei Lichtquellen zu bestimmen, oder
◦ die Position jeder der mindestens zwei Lichtquellen relativ zum Hauptbezugssystem basierend auf der Pixelposition des jeweiligen Lichtstrahls, einer Ausrichtung einer starren Oberfläche der ersten Vorrichtung relativ zum Hauptbezugssystem, einer Position der ersten Vorrichtung relativ zum Hauptbezugssystem und dem vertikalen Abstand zu berechnen und die Ausrichtung der zweiten Vorrichtung relativ zur ersten Vorrichtung basierend auf den berechneten Positionen der mindestens zwei Lichtquellen zu bestimmen.

10. Verfahren zur Geolokalisierung eines Objekts im Wasser, umfassend:

◦ Einbringen einer ersten Vorrichtung (1) in Wasser, wobei die erste Vorrichtung eine Lichtquelle (2) umfasst, die geeignet ist, einen Lichtstrahl (3) auszusenden,
◦ Einbringen einer zweiten Vorrichtung (4) in das Wasser, wobei die zweite Vorrichtung eine Kamera (6) zur Aufnahme von Bildern umfasst,
◦ Aussenden des Lichtstrahls (3) mittels der Lichtquelle (2),
◦ Erhalten einer Ausrichtung der Kamera (6) relativ zu einem Hauptbezugssystem, das durch drei orthogonale Achsen (X, Y, Z) definiert ist,
◦ Erhalten der Tiefe der ersten Vorrichtung (1) und der zweiten Vorrichtung (4) im Wasser,
◦ Bestimmen eines vertikalen Abstands ($\Delta$) zwischen der ersten Vorrichtung (1) und der zweiten Vorrichtung (4) basierend auf der Tiefe derselben im Wasser,

∘ Aufnehmen eines 2D-Bildes der ersten Vorrichtung (1) durch die Kamera (6),

∘ Berechnen der Pixelposition des von der Lichtquelle (2) der ersten Vorrichtung (1) ausgesendeten Lichtstrahls (3) im 2D-Bild, und

∘ Erhalten einer Position der zweiten Vorrichtung (4) relativ zum Hauptbezugssystem und Berechnen einer Position der ersten Vorrichtung (1) relativ zum Hauptbezugssystem basierend auf der Pixelposition des Lichtstrahls (3), der Ausrichtung der Kamera (6), der Position der zweiten Vorrichtung (4) relativ zum Hauptbezugssystem und dem vertikalen Abstand ($\Delta$), oder Erhalten einer Position der ersten Vorrichtung (1) relativ zum Hauptbezugssystem und Berechnen einer Position der zweiten Vorrichtung (4) relativ zum Hauptbezugssystem basierend auf der Pixelposition des Lichtstrahls (3), der Ausrichtung der Kamera (6), der Position der ersten Vorrichtung (1) relativ zum Hauptbezugssystem und dem vertikalen Abstand ($\Delta$).

11. Verfahren nach Anspruch 10, wobei die für die Berechnung der Position der ersten Vorrichtung (1) oder der zweiten Vorrichtung (4) verwendete Position der zweiten Vorrichtung (4) oder der ersten Vorrichtung (1) in einem Datenspeicher gespeichert oder durch eine Positionsvorrichtung bereitgestellt wird, und wobei die Tiefe der ersten Vorrichtung im Wasser in dem Datenspeicher gespeichert oder durch einen in der ersten Vorrichtung (1) enthaltenen Tiefenmesser (12) gemessen wird, und die Tiefe der zweiten Vorrichtung (4) im Wasser in dem Datenspeicher gespeichert oder durch einen in der zweiten Vorrichtung (4) enthaltenen Tiefenmesser gemessen wird.

12. Verfahren nach einem der Ansprüche 10-11, wobei der Schritt des Erhaltens der Position und/oder Tiefe der ersten Vorrichtung (1) umfasst:

∘ Modulieren des ausgesendeten Lichtstrahls (3), sodass der Lichtstrahl Informationen über die Position und/oder Tiefe der ersten Vorrichtung (1) überträgt,

∘ Erfassen des Lichtstrahls (3) durch einen optischen Sensor (14),

∘ Bestimmen der Position und/oder Tiefe der ersten Vorrichtung (1) basierend auf dem vom optischen Sensor (14) erfassten Lichtstrahl (3).

13. Verfahren nach einem der Ansprüche 10-12, wobei der Schritt des Erhaltens der Position und/oder Tiefe mindestens einer der ersten Vorrichtung (1) und der zweiten Vorrichtung (4) im Wasser umfasst:

∘ Aussenden eines akustischen oder elektrischen Signals, das die Position und/oder Tiefe einer der ersten Vorrichtung (1) und der zweiten Vorrichtung (4) darstellt,

∘ Empfangen des akustischen oder elektrischen Signals,

∘ Bestimmen der Position und/oder Tiefe der einen der ersten Vorrichtung (1) und der zweiten Vorrichtung (4) basierend auf dem empfangenen akustischen oder elektrischen Signal.

14. Verfahren nach einem der Ansprüche 10-13, umfassend:

o Vorhersagen einer nächsten Position des Lichtstrahls (3) im durch die Kamera (6) aufgenommenen 2D-Bild durch Durchführen einer rekursiven Filterung basierend auf mindestens einer aktuellen Position und früheren Positionen des Lichtstrahls (3) im 2D-Bild.

15. Verfahren nach einem der Ansprüche 10-14, wobei die erste Vorrichtung mindestens zwei Lichtquellen umfasst, die geeignet sind, jeweilige Lichtstrahlen auszusenden, wobei der Abstand zwischen jedem Paar von Lichtquellen festgelegt ist, wobei das Verfahren umfasst:

∘ Berechnen der Pixelposition jedes von jeder Lichtquelle der ersten Vorrichtung ausgesendeten Lichtstrahls im 2D-Bild,

∘ Berechnen der Position jeder der mindestens zwei Lichtquellen relativ zum Hauptbezugssystem basierend auf der Pixelposition des jeweiligen Lichtstrahls, der Ausrichtung der Kamera, einer Position der zweiten Vorrichtung relativ zum Hauptbezugssystem und dem vertikalen Abstand, und Bestimmen der Ausrichtung der ersten Vorrichtung relativ zur zweiten Vorrichtung basierend auf den berechneten Positionen der mindestens zwei Lichtquellen, oder

∘ Berechnen der Position jeder der mindestens zwei Lichtquellen relativ zum Hauptbezugssystem basierend auf der Pixelposition des jeweiligen Lichtstrahls, einer Ausrichtung einer starren Oberfläche der ersten Vorrichtung relativ zum Hauptbezugssystem, einer Position der ersten Vorrichtung relativ zum Hauptbezugssystem und dem vertikalen Abstand, und Bestimmen der Ausrichtung der zweiten Vorrichtung relativ zur ersten Vorrichtung basierend auf den berechneten Positionen der mindestens zwei Lichtquellen.

**Revendications**

1. Système (100 ; 101 ; 102) pour la géolocalisation d'un objet dans l'eau, comprenant :

   ○ un premier dispositif (1) destiné à être immergé dans, ou à flotter sur, l'eau, le premier dispositif (1) comprenant une source lumineuse (2) apte à émettre un faisceau lumineux (3),
   ○ un second dispositif (4) destiné à être immergé dans, ou à flotter sur, l'eau, le second dispositif (4) comprenant une caméra (6) pour prendre des images 2D et un dispositif de mesure (7) agencé pour fournir une orientation de la caméra (6) par rapport à un référentiel principal défini par trois axes orthogonaux (X, Y, Z),
   ○ une unité de traitement (9) connectée de manière opérationnelle à au moins la caméra (6), l'unité de traitement (9) étant configurée pour :

   ■ déterminer une distance verticale (Δ) entre le premier dispositif (1) et le second dispositif (4) basée sur la profondeur dans l'eau des deux dispositifs,
   ■ capturer une image 2D du premier dispositif (1) à travers la caméra (6),
   ■ calculer la position en pixels dans l'image 2D du faisceau lumineux (3) émis par la source lumineuse (2) du premier dispositif (1),
   ■ calculer une position du premier dispositif (1) par rapport au référentiel principal basée sur la position en pixels du faisceau lumineux (3), l'orientation de la caméra (6), une position du second dispositif (4) par rapport au référentiel principal et la distance verticale (Δ) ou calculer une position du second dispositif (4) par rapport au référentiel principal basée sur la position en pixels du faisceau lumineux (3), l'orientation de la caméra (6), une position du premier dispositif (1) par rapport au référentiel principal et la distance verticale (Δ).

2. Système selon la revendication 1, dans lequel la position du second dispositif (4) ou du premier dispositif (1) utilisée pour calculer la position du premier dispositif (1) ou du second dispositif (4), respectivement, est stockée dans un dispositif de stockage de données ou fournie par un dispositif de positionnement et dans lequel la profondeur du premier dispositif (1) dans l'eau est stockée dans le dispositif de stockage de données ou mesurée par une jauge de profondeur (12) comprise dans le premier dispositif (1) et la profondeur du second dispositif (4) dans l'eau est stockée dans le dispositif de stockage de données ou mesurée par une jauge de profondeur comprise dans le second dispositif (4).

3. Système selon la revendication 2, dans lequel l'unité de traitement (9) est connectée de manière opérationnelle au dispositif de stockage de données ou au dispositif de positionnement afin d'obtenir la position du second dispositif (4) ou du premier dispositif (1) pour calculer la position du premier dispositif (1) ou du second dispositif (4), respectivement, et dans lequel l'unité de traitement (9) est connectée de manière opérationnelle au dispositif de stockage de données ou à la jauge de profondeur du premier dispositif (1) afin d'obtenir la profondeur du premier dispositif (1) dans l'eau et au dispositif de stockage de données ou à la jauge de profondeur du second dispositif (4) afin d'obtenir la profondeur du second dispositif (4) dans l'eau pour déterminer la distance verticale (Δ).

4. Système selon la revendication 3, dans lequel le dispositif de positionnement comprend au moins l'un parmi un capteur de position absolue, un système de positionnement cinématique en temps réel (RTK), un suivi par téléphone mobile, un système de localisation en temps réel basé sur une technologie radio, optique ou ultrasonique, et un système de positionnement basé sur des méthodes de positionnement acoustique sous-marin, comme USBL, LBL ou SBL, dans lequel le premier dispositif (1) ou le second dispositif (4) est de préférence pourvu du dispositif de positionnement.

5. Système selon l'une quelconque des revendications précédentes, dans lequel le premier dispositif (1) comprend une première unité de contrôle (13) connectée à la source lumineuse (2) pour la modulation du faisceau lumineux (3) de sorte que le faisceau lumineux (3) transmette des informations sur la position et/ou la profondeur du premier dispositif (1) et dans lequel le second dispositif (4) comprend un capteur optique (14) apte à détecter le faisceau lumineux (3), l'unité de traitement (9) étant connectée au capteur optique (14) pour obtenir la position et/ou la profondeur du premier dispositif (1) basées sur le faisceau lumineux (3) détecté par le capteur optique (14).

6. Système selon l'une quelconque des revendications précédentes, dans lequel l'un du premier dispositif (1) et du second dispositif (4) possède un émetteur acoustique (15) pour émettre un signal acoustique qui représente la position et/ou la profondeur du dispositif concerné et l'autre du premier dispositif et du second dispositif possède un récepteur acoustique (16) pour recevoir le signal acoustique émis par l'émetteur acoustique (15), l'unité de traitement (9) étant connectée au récepteur acoustique (16) pour obtenir la position et/ou la profondeur de l'un du premier dispositif (1) et du second dispositif (4) basées sur le signal reçu par le récepteur acoustique (16).

7. Système selon l'une quelconque des revendications précédentes, dans lequel le premier dispositif (1) et le second dispositif (4) sont connectés l'un à l'autre par un câble de communication marine (17) à travers lequel le premier dispositif transmet au second dispositif des informations sur sa profondeur et/ou sa position ou le second dispositif transmet au premier dispositif des informations sur sa profondeur et/ou sa position.

8. Système selon l'une quelconque des revendications précédentes, dans lequel l'unité de traitement est configurée pour prédire une position suivante du faisceau lumineux (3) dans l'image 2D capturée par la caméra (6) en effectuant un algorithme de filtrage récursif basé sur au moins une position actuelle et des positions précédentes du faisceau lumineux (3) dans l'image 2D.

9. Système selon l'une quelconque des revendications précédentes, dans lequel le premier dispositif comprend au moins deux sources lumineuses aptes à émettre des faisceaux lumineux respectifs, la distance entre chaque couple de sources lumineuses étant fixe, et dans lequel l'unité de traitement (9) est configurée pour :

  ∘ calculer la position en pixels dans l'image 2D de chaque faisceau lumineux émis par les au moins deux sources lumineuses du premier dispositif, et
  ∘ calculer la position de chacune des au moins deux sources lumineuses par rapport au référentiel principal basée sur la position en pixels du faisceau lumineux concerné, l'orientation de la caméra, une position du second dispositif par rapport au référentiel principal et la distance verticale, et déterminer l'orientation du premier dispositif par rapport au second dispositif basée sur les positions calculées des au moins deux sources lumineuses, ou
  ∘ calculer la position de chacune des au moins deux sources lumineuses par rapport au référentiel principal basée sur la position en pixels du faisceau lumineux concerné, une orientation d'une surface rigide du premier dispositif par rapport au référentiel principal, une position du premier dispositif par rapport au référentiel principal et la distance verticale, et déterminer l'orientation du second dispositif par rapport au premier dispositif basée sur les positions calculées des au moins deux sources lumineuses.

10. Méthode pour la géolocalisation d'un objet dans l'eau, comprenant :

  ∘ la mise d'un premier dispositif (1) dans l'eau, le premier dispositif comprenant une source lumineuse (2) apte à émettre un faisceau lumineux (3),
  ∘ la mise d'un second dispositif (4) dans l'eau, le second dispositif comprenant une caméra (6) pour prendre des images,
  ∘ l'émission du faisceau lumineux (3) au moyen de la source lumineuse (2),
  ∘ l'obtention d'une orientation de la caméra (6) par rapport à un référentiel principal défini par trois axes orthogonaux (X, Y, Z),
  ∘ l'obtention de la profondeur du premier dispositif (1) et du second dispositif (4) dans l'eau,
  ∘ la détermination d'une distance verticale (Δ) entre le premier dispositif (1) et le second dispositif (4) basée sur leur profondeur dans l'eau,
  ∘ la capture d'une image 2D du premier dispositif (1) à travers la caméra (6),
  ∘ le calcul de la position en pixels dans l'image 2D du faisceau lumineux (3) émis par la source lumineuse (2) du premier dispositif (1), et
  ∘ l'obtention d'une position du second dispositif (4) par rapport au référentiel principal et le calcul d'une position du premier dispositif (1) par rapport au référentiel principal basée sur la position en pixels du faisceau lumineux (3), l'orientation de la caméra (6), la position du second dispositif (4) par rapport au référentiel principal et la distance verticale (Δ), ou l'obtention d'une position du premier dispositif (1) par rapport au référentiel principal et le calcul d'une position du second dispositif (4) par rapport au référentiel principal basée sur la position en pixels du faisceau lumineux (3), l'orientation de la caméra (6), la position du premier dispositif (1) par rapport au référentiel principal et la distance verticale (Δ).

11. Méthode selon la revendication 10, dans laquelle la position du second dispositif (4) ou du premier dispositif (1) utilisée pour calculer la position du premier dispositif (1) ou du second dispositif (4), respectivement, est stockée dans un dispositif de stockage de données ou fournie par un dispositif de positionnement et dans laquelle la profondeur du premier dispositif dans l'eau est stockée dans le dispositif de stockage de données ou mesurée par une jauge de profondeur (12) comprise dans le premier dispositif (1) et la profondeur du second dispositif (4) dans l'eau est stockée dans le dispositif de stockage de données ou mesurée par une jauge de profondeur comprise dans le second dispositif (4).

12. Méthode selon l'une quelconque des revendications 10-11, dans laquelle l'étape d'obtention de la position et/ou de la profondeur du premier dispositif (1) comprend :

   ◦ la modulation du faisceau lumineux émis (3) de sorte que le faisceau lumineux transmette des informations sur la position et/ou la profondeur du premier dispositif (1),
   ◦ la détection du faisceau lumineux (3) par un capteur optique (14),
   ◦ la détermination de la position et/ou de la profondeur du premier dispositif (1) basée sur le faisceau lumineux (3) détecté par le capteur optique (14).

13. Méthode selon l'une quelconque des revendications 10-12, dans laquelle l'étape d'obtention de la position et/ou de la profondeur d'au moins l'un du premier dispositif (1) et du second dispositif (4) dans l'eau comprend :

   ◦ l'émission d'un signal acoustique ou électrique qui représente la position et/ou la profondeur de l'un entre le premier dispositif (1) et le second dispositif (4),
   ◦ la réception du signal acoustique ou électrique,
   ◦ la détermination de la position et/ou de la profondeur de l'un entre le premier dispositif (1) et le second dispositif (4) basée sur le signal acoustique ou électrique reçu.

14. Méthode selon l'une quelconque des revendications 10-13, comprenant :

   ◦ la prédiction d'une position suivante du faisceau lumineux (3) dans l'image 2D capturée par la caméra (6) en effectuant un filtrage récursif basé sur au moins une position actuelle et des positions précédentes du faisceau lumineux (3) dans l'image 2D.

15. Méthode selon l'une quelconque des revendications 10-14, dans laquelle le premier dispositif comprend au moins deux sources lumineuses aptes à émettre des faisceaux lumineux respectifs, la distance entre chaque couple de sources lumineuses étant fixe, la méthode comprenant :

   ◦ le calcul de la position en pixels dans l'image 2D de chaque faisceau lumineux émis par chaque source lumineuse du premier dispositif,
   ◦ le calcul de la position de chacune des au moins deux sources lumineuses par rapport au référentiel principal basée sur la position en pixels du faisceau lumineux concerné, l'orientation de la caméra, une position du second dispositif par rapport au référentiel principal et la distance verticale, et la détermination de l'orientation du premier dispositif par rapport au second dispositif basée sur les positions calculées des au moins deux sources lumineuses, ou
   ◦ le calcul de la position de chacune des au moins deux sources lumineuses par rapport au référentiel principal basée sur la position en pixels du faisceau lumineux concerné, une orientation d'une surface rigide du premier dispositif par rapport au référentiel principal, une position du premier dispositif par rapport au référentiel principal et la distance verticale, et la détermination de l'orientation du second dispositif par rapport au premier dispositif basée sur les positions calculées des au moins deux sources lumineuses.

100

9

8

7

5

4

14

6

3
2

1

12    13

z

x

y

*Fig. 1*

P = (X, Y, Z)

11

u

10

z

$Z_L$

p

x

$(c_x, c_y)$

$Z_C$

$X_C$

$F_C$

y

$Y_C$

v

*Fig. 2*

3D Detected Position

Fig. 3

Kalman Filter Application on a 2D Path Light Detection

Fig. 4

*Fig. 5*

*Fig. 6*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012129612 A1